# EUROPEAN PATENT APPLICATION

(11) **EP 4 811 924 A1**
(43) Date of publication of application: **23.09.2026**
(21) Application number: 23958550.8
(22) Date of filing: 15.11.2023
(51) Int. Cl.: H04W 76/14

(54) **COMMUNICATION METHOD, COMMUNICATION DEVICE AND COMMUNICATION SYSTEM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/131836
(87) International publication number: WO 2025/102269

(57) **Abstract**

The embodiments of the present disclosure relate to a communication method, a communication device and a communication system. The communication method comprises: within a first TXOP, in response to data sent by a TXOP holding end, replying the TXOP holding end with a block acknowledgment (Block Ack) frame, wherein the Block Ack frame comprises at least one of a first identifier and a first identifier field; the first identifier identifies whether a TXOP responding end requests the TXOP holding end to share part of the transmission time of the first TXOP for transmission of low-latency service data; and the first identifier field identifies a duration required by the TXOP responding end to transmit the low-latency service data. Thus, sudden low-latency services are coped with, a low-latency service data transmission mechanism is improved, and the transmission latency is reduced.

## Description

### TECHNICAL FIELD

The present disclosure relates to the technical field of communication, and in particular, to a communication method, a communication device and a communication system.

### BACKGROUND

Currently, Wi-Fi technology is being researched, such as Ultra High Reliability (UHR), with the vision of improving the reliability of Wireless Local Area Networks (WLAN) connections, reducing latency, improving manageability, increasing throughput at different signal-to-noise ratio (SNR) levels, and reducing device-level power consumption, etc.

In UHR, the low-latency service transmission mechanism will be further enhanced and support multi-connection scenarios. In order to enhance the throughput under different signal-to-noise ratio (SNR) levels, the transmission opportunity (TXOP) sharing manner may be adopted in UHR. Therefore, the TXOP sharing mechanism needs to be further improved to meet the transmission requirements of UHR.

### SUMMARY

The embodiments of the present disclosure provide a communication method, a communication device, and a communication system to further improve the TXOP sharing mechanism to meet the transmission requirements of UHR.

On the one hand, an embodiment of the present disclosure provides a communication method, which is applied to a TXOP responder, and the method includes:
in a first TXOP, in response to data sent by a TXOP initiator, replying with a Block Ack frame to the TXOP initiator; where the Block Ack frame includes at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

On the other hand, an embodiment of the present disclosure further provides a communication method, which is applied to a TXOP initiator, and the method includes:
in a first TXOP, during a process of sending data to a TXOP responder, receiving a Block Ack frame sent by the TXOP responder; where the Block Ack frame includes at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

On the other hand, an embodiment of the present disclosure further provides a communication device, where the communication device is a TXOP responder, and the TXOP responder includes:
a first processing module, configured to reply with a Block Ack frame to the TXOP initiator in response to data sent by the TXOP initiator in a first TXOP; where the Block Ack frame includes at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

On the other hand, an embodiment of the present disclosure further provides a communication device, where the communication device is a TXOP initiator, and the TXOP initiator includes:
a second processing module, configured to receive a Block Ack frame sent by a TXOP responder during a process of sending data to the TXOP responder in a first TXOP; where the Block Ack frame includes at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

On the other hand, an embodiment of the present disclosure further provides a communication device, where the communication device is a TXOP responder, including:
one or more processors;
where the TXOP responder is configured to execute the communication method described in the embodiments of the present disclosure.

On the other hand, an embodiment of the present disclosure further provides a communication device, where the communication device is a TXOP initiator, including:
one or more processors;
where the TXOP initiator is configured to execute the communication method described in the embodiments of the present disclosure.

The embodiments of the present disclosure further provide a communication system, including a TXOP responder and a TXOP initiator; where the TXOP responder is configured to implement the communication method described in the embodiments of the present disclosure, and the TXOP initiator is configured to implement the communication method described in the embodiments of the present disclosure.

The embodiment of the present disclosure further provides a storage medium, which stores instructions. When the instructions are executed on a communication device, the communication device executes the communication method as described in the embodiments of the present disclosure.

In the embodiments of the present disclosure, during the process of the TXOP initiator sending data to the TXOP responder, if the TXOP responder has the need to transmit other low-latency service data, the first identifier in the Block Ack frame is set to identify that the TXOP responder requests the TXOP initiator to share part of the transmission time of the first TXOP for transmission of the low-latency service data, and the first identification field in the Block Ack frame replied to the TXOP initiator is set to indicate the duration required for the TXOP responder to transmit the low-latency service data, that is, the TXOP responder may transmit the low-latency service data to the receiving end of the low-latency service data in the TXOP shared by the TXOP initiator. In this way, if the TXOP initiator caches low-latency service data to be transmitted to the receiving end of the low-latency service data in the TXOP, the first identifier and the first identification field in the device Block Ack frame can be used to request the TXOP initiator to allocate part of the transmission time of the TXOP, so as to cope with bursty low-latency services, improve the low-latency service data transmission mechanism, and reduce transmission delay.

Additional aspects and advantages of the embodiments of the present disclosure will be partially given in the description below, which will become apparent from the description below, or will be learned through the practice of the present disclosure.

### BRIEF DESCRIPTION OF THE DRAWINGS

In order to more clearly illustrate the technical solutions in the embodiments of the present disclosure, the drawings required for describing the embodiments are introduced below. The following drawings are only some embodiments of the present disclosure and do not impose specific limitations on the protection scope of the present disclosure.
FIG. 1 is an exemplary schematic diagram of an architecture of a communication system provided according to an embodiment of the present disclosure;
FIG. 2 is a first exemplary interaction diagram of a method provided according to an embodiment of the present disclosure;
FIG. 3 is a second exemplary interaction diagram of a method provided according to an embodiment of the present disclosure;
FIG. 4 is a schematic diagram of a structure of a Block Ack frame provided according to an embodiment of the present disclosure;
FIG. 5 is a first flowchart of a communication method according to an embodiment of the present disclosure;
FIG. 6 is a second flowchart of the communication method provided in the embodiment of the present disclosure;
FIG. 7 is a schematic diagram of a structure of a TXOP responder proposed in an embodiment of the present disclosure;
FIG. 8 is a schematic diagram of a structure of a TXOP initiator proposed in an embodiment of the present disclosure;
FIG. 9 is a schematic diagram of a structure of a terminal provided in an embodiment of the present disclosure;
FIG. 10 is a schematic diagram of a structure of a chip proposed in an embodiment of the present disclosure.

### DETAILED DESCRIPTION

The embodiments of the present disclosure provide a communication method, a communication device, and a communication system.

In a first aspect, an embodiment of the present disclosure provides a communication method, which is applied to a TXOP responder. The method includes:
in a first TXOP, in response to data sent by a TXOP initiator, replying with a Block Ack frame to the TXOP initiator; where the Block Ack frame includes at least one of a first identifier and a first identification field;
the first identifier identifies whether the TXOP responder requests the TXOP initiator to share part of transmission time of the first TXOP for transmission of low-latency service data;
the first identification field identifies a duration required for the TXOP responder to transmit the low-latency service data.

In the above embodiment, during the process of the TXOP initiator sending data to the TXOP responder, if the TXOP responder has the need to transmit other low-latency service data, the first identifier in the Block Ack frame is set to identify that the TXOP responder requests the TXOP initiator to share part of the transmission time of the first TXOP for transmission of the low-latency service data, and the first identification field in the Block Ack frame replied to the TXOP initiator is set to indicate the duration required for the TXOP responder to transmit the low-latency service data, that is, the TXOP responder may transmit the low-latency service data to the receiving end of the low-latency service data in the TXOP shared by the TXOP initiator. In this way, if the TXOP initiator caches low-latency service data to be transmitted to the receiving end of the low-latency service data in the TXOP, the first identifier and the first identification field in the device Block Ack frame can be used to request the TXOP initiator to allocate part of the transmission time of the TXOP, so as to cope with bursty low-latency services, improve the low-latency service data transmission mechanism, and reduce transmission delay.

In combination with some embodiments of the first aspect, in some embodiments, the first identifier is carried in a Block Ack (BA) Control field of the Block Ack frame;
the first identifier is set to a first parameter value, identifying that the TXOP responder does not request the TXOP initiator to share part of the transmission time of the first TXOP for transmission of the low-latency service data;
the first identifier is set to a second parameter value, identifying that the TXOP responder requests the TXOP initiator to share part of the transmission time of the first TXOP for transmission of the low-latency service data.

In the above embodiment, if the TXOP responder does not have a need to transmit low-latency service data to the receiving end of the low-latency service data within the TXOP, the first identifier in the Block Ack frame is set to the first parameter value. If the TXOP responder has a need to transmit low-latency service data to the receiving end of the low-latency service data within the TXOP, the first identifier in the Block Ack frame is set to the second parameter value. By defining the value of the first identifier in the Block Ack frame, the low-latency service transmission mechanism within the TXOP is further improved.

In combination with some embodiments of the first aspect, in some embodiments, when the first identifier is set to the second parameter value, the Block Ack frame includes a transmission opportunity request information (TXOP Request Info) field, and the first identification field is carried in the TXOP Request Info field.

In the above embodiment, when the first identifier is set to the second parameter value, the TXOP time for transmission of low-latency service data is further identified by setting the first identification field to ensure timely and effective transmission of low-latency services. The first identification field is carried in the TXOP Request Info field.

In combination with some embodiments of the first aspect, in some embodiments, after replying with a Block Ack frame to the TXOP initiator, the method further includes:
the first identifier being set to the first parameter value, receiving data sent by the TXOP initiator;
   or,
the first identifier being set to the second parameter value, receiving a multi-user request to send transmission opportunity sharing trigger (MU-RTS TXS) Trigger frame sent by the TXOP initiator; where the MU-RTS TXS Trigger frame includes a second identification field and a third identification field, the second identification field includes a device identifier of a target device to which part of the transmission time of the first TXOP is shared, and the third identification field identifies the transmission time allocated by the TXOP initiator for each of the target devices.

In the above embodiment, the TXOP responder sets the first identifier to the first parameter value, indicating that the TXOP responder currently does not need the TXOP initiator to share the TXOP for transmission of low-latency service data. At this time, the TXOP responder continues to receive data sent by the TXOP initiator in the TXOP. If the TXOP responder sets the first identifier to the second parameter value, indicating that the TXOP responder currently needs the TXOP initiator to share the TXOP for transmission of low-latency service data. At this time, the TXOP responder receives the MU-RTS TXS Trigger frame sent by the TXOP initiator, and determines whether it matches the target device to which part of the transmission time of the TXOP is shared according to the second identification field of the MU-RTS TXS Trigger frame. If matching, the transmission time allocated by the TXOP initiator can be determined according to the third identification field of the MU-RTS TXS Trigger frame, so as to transmit the low-latency service data within the transmission time allocated by the TXOP initiator, thereby ensuring the timely and effective transmission of the low-latency service data.

In combination with some embodiments of the first aspect, in some embodiments, after receiving the MU-RTS TXS Trigger frame sent by the TXOP initiator, the method includes:
the device identifier in the second identification field not including a device identifier of the TXOP responder, not responding to the MU-RTS TXS Trigger frame, and receiving data sent by the TXOP initiator;
   or
the device identifier in the second identification field including the device identifier of the TXOP responder, transmitting the low-latency service data within the transmission time shared by the TXOP initiator for the TXOP responder.

In the above embodiment, if the second identification field of the MU-RTS TXS Trigger frame does not include the device identifier of the TXOP responder, the MU-RTS TXS Trigger frame is not responded to, and the data sent by the TXOP initiator is continuously received. If the second identification field of the MU-RTS TXS Trigger frame includes the device identifier of the TXOP responder, the low-latency service data is transmitted within the transmission time allocated by the TXOP initiator, thereby ensuring the timely and effective transmission of the low-latency service data and reducing the transmission delay of the low-latency service data.

In combination with some embodiments of the first aspect, in some embodiments, transmitting the low-latency service data within the transmission time shared by the TXOP initiator for the TXOP responder includes:
sending a request to send (RTS) frame to a receiving end of the low-latency service data; where a receiving address of the RTS frame is an address of the receiving end; the duration of the RTS frame is set to: a sum of a duration of the receiving end sending a clear to send (CTS) frame, a duration required for the TXOP responder to transmit the low-latency service data, a duration of the receiving end sending an ACK frame, and three short interframe spaces;
receiving the CTS frame sent by the receiving end, and sending the low-latency service data to the receiving end.

In the above embodiment, the TXOP responder first sends an RTS frame to the receiving end of the low-latency service data within the transmission time allocated by the TXOP initiator to the TXOP responder. The receiving end may send a CTS frame to the TXOP responder after one short interframe space. After the TXOP responder receives the CTS frame, it transmits the low-latency service data after one short interframe space. The receiving end receives the low-latency service data and feeds back an ACK frame to the TXOP responder after one short interframe space, thereby finally completing the transmission of the low-latency service data and improving the low-latency service data transmission mechanism.

In combination with some embodiments of the first aspect, in some embodiments, the TXOP initiator includes a station device, and the TXOP responder includes an access point device;
or,
the TXOP initiator and the TXOP responder are two TDLS devices that have established a tunneled direct link setup (TDLS) link.

In the above embodiment, the TXOP responder may be an access point device, or a TDLS device that has established a TDLS link, which further improves the low-latency service transmission mechanism of the access point device or the TDLS device within the TXOP.

In the second aspect, an embodiment of the present disclosure proposes a communication method, which is applied to a TXOP initiator, and the method includes:
in a first TXOP, during a process of sending data to a TXOP responder, receiving a Block Ack frame sent by the TXOP responder; where the Block Ack frame includes at least one of a first identifier and a first identification field;
the first identifier identifies whether the TXOP responder requests the TXOP initiator to share part of transmission time of the first TXOP for transmission of low-latency service data;
the first identification field identifies a duration required for the TXOP responder to transmit the low-latency service data.

In combination with some embodiments of the second aspect, in some embodiments, the first identifier is carried in a Block Ack (BA) Control field of the Block Ack frame;
the first identifier is set to a first parameter value, identifying that the TXOP responder does not request to use part of the transmission time of the first TXOP shared by the TXOP initiator for transmission of the low-latency service data;
the first identifier is set to a second parameter value, identifying that the TXOP responder requests to use part of the transmission time of the first TXOP shared by the TXOP initiator for transmission of the low-latency service data.

In combination with some embodiments of the second aspect, in some embodiments, when the first identifier is set to the second parameter value, the Block Ack frame includes a transmission opportunity (TXOP) Request Info field, and the first identification field is carried in the TXOP Request Info field.

In combination with some embodiments of the second aspect, in some embodiments, after receiving the Block Ack frame sent by the TXOP responder, the method further includes:
the first identifier being set to the first parameter value, sending data to the TXOP responder;
   or
the first identifier being set to the second parameter value, sending a multi-user request to send transmission opportunity sharing trigger (MU-RTS TXS) Trigger frame to the TXOP responder; where the MU-RTS TXS Trigger frame includes a second identification field and a third identification field, the second identification field includes a device identifier of a target device to which part of the transmission time of the first TXOP is shared, and the third identification field identifies the transmission time allocated by the TXOP initiator for each of the target devices.

In combination with some embodiments of the second aspect, in some embodiments, within the transmission time allocated by the TXOP initiator to the target device, the TXOP initiator sends data only in a case of receiving a data sending request from the target device and responding to the data sending request.

In combination with some embodiments of the second aspect, in some embodiments, the TXOP initiator includes an access point device, and the TXOP responder includes a station device;
or
the TXOP initiator and the TXOP responder are two TDLS devices that have established a tunneled direct link setup (TDLS) link.

In the third aspect, an embodiment of the present disclosure further provides a communication device, where the communication device is a TXOP responder, and the TXOP responder includes a first processing module; where the TXOP responder is configured to execute optional implementations of the first aspect.

In the fourth aspect, an embodiment of the present disclosure further provides a communication device, which is a TXOP initiator, including: a second processing module; where the above-mentioned TXOP initiator is configured to execute the optional implementations of the second aspect.

In the fifth aspect, an embodiment of the present disclosure further provides a communication device, where the communication device is a TXOP responder, including:
one or more processors;
where the TXOP responder is configured to execute the optional implementations of the first aspect.

In the sixth aspect, an embodiment of the present disclosure further provides a communication device, where the communication device is a TXOP initiator, including:
one or more processors;
where the TXOP initiator is configured to execute the optional implementations of the second aspect.

In the seventh aspect, an embodiment of the present disclosure further provides a communication system, including a TXOP responder and a TXOP initiator; where the TXOP responder is configured to execute the optional implementations as described in the first aspect, and the TXOP initiator is configured to execute the optional implementations as described in the second aspect.

In the eighth aspect, an embodiment of the present disclosure further provides a storage medium storing instructions, which, when executed on a communication device, enables the communication device to execute the optional implementations described in the first and second aspects.

In the ninth aspect, an embodiment of the present disclosure proposes a program product. When the program product is executed by a communication device, the communication device executes the method described in the optional implementations of the first aspect and the second aspect.

In the tenth aspect, an embodiment of the present disclosure proposes a computer program, which, when executed on a computer, enables the computer to execute the method described in the optional implementations of the first aspect and the second aspect.

In the eleventh aspect, an embodiment of the present disclosure provides a chip or a chip system, which includes a processing circuit configured to execute the method described in the optional implementations of the first aspect and the second aspect.

It can be understood that the above-mentioned TXOP responder, TXOP initiator, communication system, storage medium, program product, computer program, chip or chip system are all used to execute the method proposed in the embodiments of the present disclosure. Therefore, the beneficial effects that can be achieved can refer to the beneficial effects in the corresponding methods, which will not be repeated here.

The embodiments of the present disclosure provide a communication method, a communication device and a communication system. In some embodiments, the terms such as communication method, signal transmission method, wireless frame transmission method, etc. can be replaced with each other, and the terms such as information processing system, communication system, etc. can be replaced with each other.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, "a plurality of" refers to two or more.

In some embodiments, the terms "at least one of", "one or more", "a plurality of", "multiple", etc. can be used interchangeably.

In some embodiments, "at least one of A and B", "A and/or B", "A in one case, B in another case", "in response to one case, A, in response to another case, B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also similar.

In some embodiments, the recording manner of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also similar.

The prefixes such as "first" and "second" in the embodiments of the present disclosure are only used to distinguish different description objects, and do not limit the position, order, priority, quantity or content of the description objects. For the description of the description objects, the description in the context of the claims or embodiments may be referred to, and the use of prefixes should not constitute unnecessary restrictions. For example, if the description object is "field", the ordinal number before the "field" in "first field" and "second field" does not limit the position or order between the "fields", and "first" and "second" do not limit whether the "first field" and "second field" are in the same message, nor does it limit the order of the "first field" and the "second field". For another example, if the description object is "level", the ordinal number before the "level" in the "first level" and the "second level" does not limit the priority between the "levels". For another example, the number of description objects is not limited by the ordinal number, and can be one or more. Taking "first apparatus" as an example, the number of "apparatuses" can be one or more. In addition, the objects modified by different prefixes can be the same or different. For example, if the description object is "apparatus", the "first apparatus" and the "second apparatus" can be the same apparatus or different apparatuses, and their types can be the same or different; for another example, if the description object is "information", the "first information" and the "second information" can be the same information or different information, and their contents can be the same or different.

In some embodiments, "including A", "comprising A", "used to indicate A", and "carrying A" can be interpreted as directly carrying A or indirectly indicating A.

In some embodiments, terms such as "in response to...", "in response to determining...", "in the case of...", "at the time of...", "when...", "if...", "in case of...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatus and device may be interpreted as physical or virtual, and their names are not limited to the names recorded in the embodiments. In some cases, they may also be understood as "equipment", "device", "circuit", "network element", "node", "function", "unit", "section", "system", "network", "chip", "chip system", "entity", "subject", etc.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

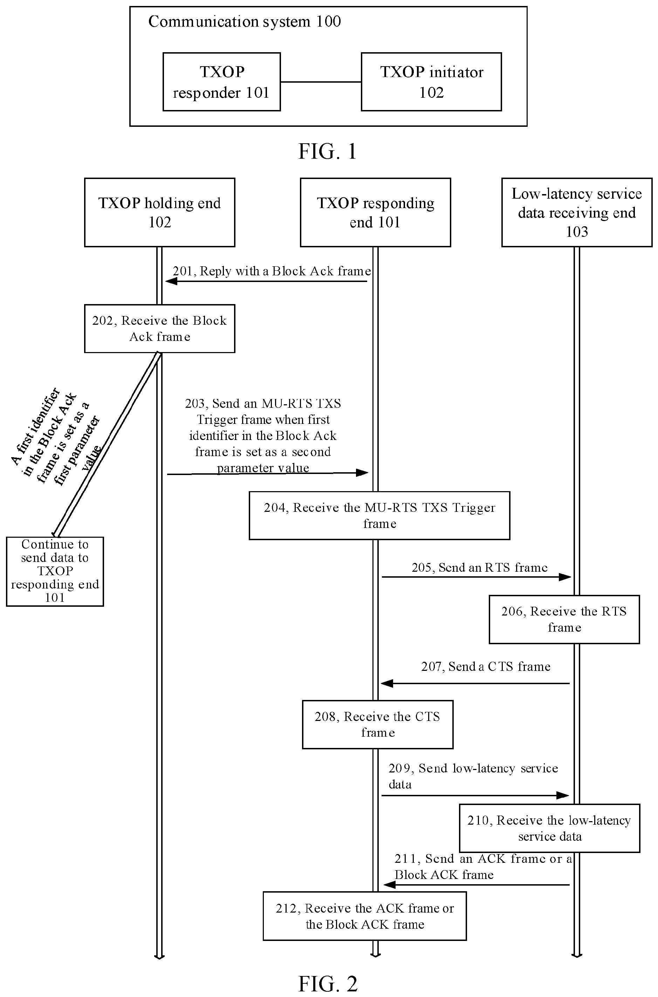

FIG. 1 is a schematic diagram of the architecture of a communication system according to an embodiment of the present disclosure.

As shown in FIG. 1, the communication system 100 includes a Transmit Opportunity (TXOP) responder 101 (which may be an Access Point, AP or P2P AP) and a TXOP initiator 102 (which may be a Station, STA or P2P STA).

In some embodiments, the TXOP responder 101 and the TXOP initiator 102 include, for example, a wireless communication chip, a wireless sensor or a wireless communication terminal supporting WiFi communication function. Optionally, the wireless communication terminal is, for example, a mobile phone, a wearable device, an Internet of Things device supporting WiFi communication function, a car with WiFi communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in a smart city, and a wireless terminal device in a smart home, but is not limited thereto.

Specifically, the TXOP responder 101 and the TXOP initiator 102 may be terminal devices or network devices with wireless fidelity (WiFi) chips. Optionally, the TXOP responder 101 and the TXOP initiator 102 may support multiple WLAN standards such as 802.11ax, 802.11be, 802.11ac, 802.11n, 802.11g, 802.11b, 802.11a, 802.11bf, 802.11bn, and support the next generation 802.11 protocol, but are not limited thereto.

In some embodiments, the TXOP responder 101 may be an access point for a mobile terminal to enter a wired network. The AP is equivalent to a bridge connecting a wired network and a wireless network. Its main function is to connect various wireless network clients together and then connect the wireless network to the Ethernet. Specifically, the AP may be a terminal device or a network device with a wireless fidelity chip. Optionally, the AP may support multiple WLAN standards such as 802.11ax, 802.11be, 802.11ac, 802.11n, 802.11g, 802.11b, 802.11a, 802.11bf, 802.11bn, and support the next generation 802.11 protocol, but is not limited thereto.

Optionally, in the embodiments of the present disclosure, AP and STA may be devices supporting multiple connections, for example, may be respectively represented as a multi-connection access point device (Access Point Multi-Link Device, AP MLD) and a multi-connection station device (Non-Access Point Multi-Link Device, Non-AP MLD); AP MLD may represent an access point supporting multi-connection communication functions, and non-AP MLD may represent a station supporting multi-connection communication functions.

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person of ordinary skill in the art can know that with the evolution of the system architecture and the emergence of new service scenarios, the technical solutions proposed in the embodiments of the present disclosure are also applicable to similar technical problems.

The following embodiments of the present disclosure may be applied to the communication system 100 shown in FIG. 1, or part of the subject, but are not limited thereto. The subjects shown in FIG. 1 are examples, and the communication system may include all or part of the subjects in FIG. 1, or may include other subjects other than FIG. 1. The number and form of the subjects are arbitrary, and each subject can be physical or virtual. The connection relationship between the subjects is illustrative, and the subjects can be connected or disconnected. The connection can be in any way, which can be direct or indirect, and can be wired or wireless.

The embodiments of the present disclosure can be applied to a wireless local area network (WLAN), such as a local area network using the 802.11 series of protocols. In the WLAN, a basic service set (BSS) is a basic component of the WLAN. The BSS network is composed of station devices with some association within a certain specific coverage area. One case of association is that the stations communicate directly with each other in an ad hoc network, which is called an independent basic service set (IBSS). Another more common case is that there is only one central station in the BSS network that is dedicated to managing the BSS, which is called an access point device, and all other STAs in the network are associated with it. Other stations in the BSS network that are not the central station are called terminals, also called non-AP STAs, and terminals and non-AP STAs are collectively referred to as STAs. When describing STAs, there is no need to distinguish between APs and non-AP STAs. In the same BSS network, due to distance, transmission power, etc., one STA cannot detect other STAs that are far away from it, and the two are hidden nodes of each other.

FIG. 2 is an interactive schematic diagram of a communication method according to an embodiment of the present disclosure. As shown in FIG. 2, the method includes the following steps.

In step 201, the TXOP responder 101 replies with a Block Ack frame.

In the WLAN communication scenario, the Transmit Opportunity (TXOP) mechanism is introduced. One TXOP refers to a bounded time period during which a device (such as an AP or STA) can transmit a specific communication category. For example, a STA obtains a TXOP through competition. Once it obtains a TXOP, the STA can transmit frames of a specific communication category within the TXOP. For another example, an AP obtains a TXOP through competition. Once it obtains a TXOP, the AP can transmit frames of a specific communication category within the TXOP. The frames can specifically be data frames, control frames, and management frames, etc. When a certain device obtains one TXOP through channel competition, the device is called a TXOP holder. During the frame exchange sequence, the TXOP holder sends frames to other device. During this process, the device does not obtain a TXOP. The device is called a TXOP responder, and accordingly, the TXOP holder is called a TXOP initiator.

In actual communication scenarios, during the TXOP initiator sends data to the associated TXOP responder, the TXOP responder may cache low-latency service data to be transmitted to other station device(s). Since only the TXOP initiator can actively send data in one TXOP, other station devices can only receive data or send a response frame for the received data. Therefore, the TXOP responder can only have the opportunity to transmit low-latency service data to other station devices after the TXOP reserved by the TXOP initiator ends, which causes serious delays in the transmission of low-latency service data.

In one TXOP, there are a TXOP initiator and a TXOP responder. The TXOP initiator can be a STA or a P2P STA, the TXOP responder can be an AP or a P2P STA, and other station devices can be STAs or P2P APs.

In the embodiments of the present disclosure, when the TXOP initiator is a STA, after obtaining the TXOP transmission opportunity, the STA sends a request to send (RTS) frame to the TXOP responder (AP). The RTS frame is used to reserve the right to use the communication medium for use by the TXOP responder.

When the TXOP initiator is a P2P STA, after obtaining the TXOP transmission opportunity, the P2P STA sends an RTS frame to the TXOP responder (P2P STA). The RTS frame is used to reserve the right to use the communication medium for used by the TXOP responder.

In the embodiments of the present disclosure, after receiving the RTS frame, the TXOP responder feeds back a clear to send (CTS) frame to the TXOP initiator to confirm the transmission of the TXOP initiator.

In the embodiments of the present disclosure, after receiving the CTS frame, the TXOP initiator confirms that the CTS is the feedback of the RTS frame previously sent by itself, and the channel of the TXOP initiator is idle, then the TXOP initiator sends data to the TXOP responder.

In the embodiments of the present disclosure, the TXOP responder, in the first TXOP, in response to the data sent by the TXOP initiator, replies with a Block Ack frame to the TXOP initiator; where the Block Ack frame includes at least one of a first identifier and a first identification field;
the first identifier identifies whether the TXOP responder requests the TXOP initiator to share part of transmission time of the first TXOP for transmission of low-latency service data;
the first identification field identifies a duration required for the TXOP responder to transmit the low-latency service data.

The embodiments of the present disclosure are described with AP as the TXOP responder and STA as the TXOP initiator. During AP receives uplink data sent by STA, when AP has temporary or bursty low-latency service data to transmit, AP carries the first identifier and the first identification field in the Block Ack frame responding to STA. The first identifier identifies whether AP requests STA to share part of the transmission time of TXOP for transmission of temporary or bursty low-latency service data; the first identification field identifies the duration required for AP to transmit temporary or bursty low-latency service data.

In some embodiments, the first identifier is carried in a BA Control field of the Block Ack frame;
the first identifier is set to a first parameter value, identifying that the TXOP responder does not request the TXOP initiator to share part of the transmission time of the first TXOP for transmission of the low-latency service data;
the first identifier is set to a second parameter value, identifying that the TXOP responder requests the TXOP initiator to share part of the transmission time of the first TXOP for transmission of the low-latency service data.

For example, the BA Control field of the Block Ack frame includes a first identifier. When the first identifier is set to 0, it indicates that the TXOP responder does not request the TXOP initiator to share part of the transmission time of the first TXOP for low-latency service data transmission; when the first identifier is set to 1, it indicates that the TXOP responder requests the TXOP initiator to share part of the transmission time of the first TXOP for low-latency service data transmission.

In some embodiments, when the first identifier is set to the second parameter value, the Block Ack frame includes a TXOP Request Info field, and the first identification field is carried in the TXOP Request Info field.

For example, when the first identifier is set to 1, the Block Ack frame also includes a first identification field, which is carried in the TXOP Request Info field.

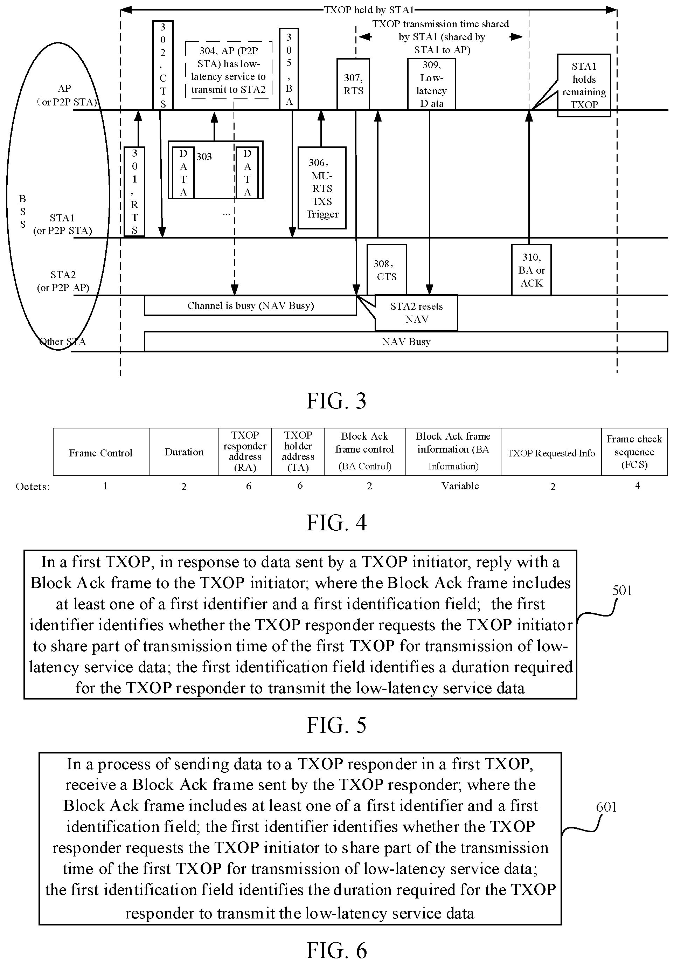

In some embodiments, as shown in FIG. 4, the size of the TXOP Requested Info field may be 2 octets, where the size of the first identification field is 9 bits, in units of 16 µs (each bit represents 16 microseconds); the other 7 bits may be reserved. The transmission duration identified by the first identification field is determined by the AP according to the size of the cached temporary or bursty low-latency service data.

In step 202, the TXOP initiator 102 receives the Block Ack frame.

In the embodiments of the present disclosure, in a process of sending data to a TXOP responder in a first TXOP, a Block Ack frame sent by the TXOP responder is received; where the Block Ack frame includes at least one of a first identifier and a first identification field;
the first identifier identifies whether the TXOP responder requests the TXOP initiator to share part of the transmission time of the first TXOP for transmission of low-latency service data;
the first identification field identifies the duration required for the TXOP responder to transmit the low-latency service data.

The STA can respond according to the Block Ack frame sent by the AP. For example, when the first identifier is set to 0, it indicates that the AP does not request the STA to share part of the transmission time of the first TXOP for low-latency service data transmission, and the STA continues to send data to the AP; when the first identifier is set to 1, it indicates that the AP requests the STA to share part of the transmission time of the first TXOP for low-latency service data transmission.

In step 203, the first identifier in the Block Ack frame is set to the second parameter value, and the TXOP initiator 102 sends a MU-RTS TXS Trigger frame.

In the embodiments of the present disclosure, the first identifier is set to the second parameter value, and a MU-RTS TXS Trigger frame is sent to the TXOP responder; where the MU-RTS TXS Trigger frame includes a second identification field and a third identification field, the second identification field includes a device identifier of a target device to which part of the transmission time of the first TXOP is shared, and the third identification field identifies the transmission time allocated by the TXOP initiator for each of the target devices.

For example, after one short interframe space (SIFS) upon receiving a Block Ack frame, the STA sends a MU-RTS TXS Trigger frame to the AP. The MU-RTS TXS Trigger frame includes one User Info field, and the User Info field includes but is not limited to a second identification field and a third identification field. The second identification field is used to identify that the User Info field carries the device identifier of the target device to which part of the transmission time of the first TXOP is shared. Optionally, the second identification field can be the media access control (MAC) address of the target AP. The third identification field is used to identify the TXOP duration allocated by the STA to the AP.

The TXOP duration allocated by STA to AP is greater than or equal to the sum of the duration of AP sending RTS frame to the receiving end (STA or P2P AP) of low-latency service data, the duration of the receiving end feeding back CTS frame to AP, the duration required for AP to transmit low-latency service data to the receiving end, the duration of the receiving end feeding back acknowledgement (ACK) frame or Block Ack frame to AP, and the duration of four short interframe spaces.

The four short interframe spaces include one short interframe space between the MU-RTS TXS Trigger frame and the RTS frame, one short interframe space between the RTS frame and the CTS frame, one short interframe space between the CTS frame and the data frame transmitting low-latency service data, and one short interframe space between the data frame transmitting low-latency service data and the receiving end feeding back ACK frame or BA frame.

In step 204, the TXOP responder 101 receives the MU-RTS TXS Trigger frame.

In the embodiments of the present disclosure, the AP responds according to the MU-RTS TXS Trigger frame received from the STA. The MU-RTS TXS Trigger frame includes a second identification field and a third identification field, the second identification field includes the device identifier of the target device to which part of the transmission time of the first TXOP is shared, and the third identification field identifies the transmission time allocated by the TXOP initiator to each of the target devices.

In some embodiments, the device identifier in the second identification field does not include the device identifier of the TXOP responder, the MU-RTS TXS Trigger frame is not responded to, and data sent by the TXOP initiator is received;
or,
the device identifier in the second identification field includes the device identifier of the TXOP responder, the low-latency service data is transmitted within the transmission time shared by the TXOP initiator for the TXOP responder.

For example, if the device identifier of the TXOP responder identified in the second identification field (User Info field) in the MU-RTS TXS Trigger frame does not match the device identifier of the AP, the AP does not respond and remains in the receiving state; if the identification information in the second identification field in the MU-RTS TXS Trigger frame matches the device identifier of the AP, the AP, as the temporary holder of the TXOP, sends its cached temporary/bursty low-latency service data to the receiving end.

In step 205: the TXOP responder 101 sends an RTS frame.

In the embodiments of the present disclosure, transmitting the low-latency service data within the transmission time shared by the TXOP initiator for the TXOP responder includes:
sending an RTS frame to a receiving end of the low-latency service data; where the receiving address of the RTS frame is the address of the receiving end; the duration of the RTS frame is set to: the sum of the duration of the receiving end sending the CTS frame, the duration required for the TXOP responder to transmit the low-latency service data, the duration of the receiving end sending the ACK frame, and the duration of three short interframe spaces;
receiving the CTS frame sent by the receiving end, and sending the low-latency service data to the receiving end.

For example, after receiving the MU-RTS TXS Trigger frame and an interval of one SIFS, the AP sends an RTS frame to the receiving end. The target address of the RTS is the address of the receiving end; the duration (Duration field) of the RTS frame is set to: the sum of the duration of the receiving end sending the CTS frame, the duration required for the TXOP responder to transmit the low-latency service data, the duration of the receiving end sending the ACK frame, and three short interframe spaces.

The three short interframe spaces include one short interframe space between the RTS frame and the CTS frame, one short interframe space between the CTS frame and the data frame transmitting low-latency service data, and one short interframe space between the data frame transmitting low-latency service data and the receiving end feeding back ACK frame or BA frame.

In step 206: the low-latency service data receiving end 103 receives the RTS frame.

In the embodiments of the present disclosure, the receiving end receives the RTS frame sent by the AP within the transmission time shared by the STA.

In step 207: the low-latency service data receiving end 103 sends a CTS frame.

In the embodiments of the present disclosure, the receiving end feeds back a CTS frame to the AP after one SIFS upon receiving the RTS frame sent by the AP. The CTS frame carries the AP address, and the Duration field of the CTS frame is set to: the sum of the duration required for the AP to transmit low-latency service data, the duration for the receiving end to feed back an ACK frame or a Block Ack frame to the AP, and two short interframe spaces.

The two short interframe spaces include one short interframe space between a CTS frame and a data frame transmitting low-latency service data and one short interframe space between a data frame transmitting low-latency service data and the receiving end feeding back an ACK frame or BA frame.

In step 208: the TXOP responder 101 receives the CTS frame.

The AP receives a CTS frame fed back by the receiving end within the TXOP transmission time allocated by the STA, and determines that the current channel of the receiving end is idle according to the CTS frame.

In step 209: the TXOP responder 101 sends low-latency service data.

The AP sends the temporary low-latency service data to the receiving end after one SIFS upon receiving the CTS sent by the receiving end.

In step 210: the low-latency service data receiving end 103 receives the low-latency service data.

The receiving end receives a data frame including low-latency service data sent by the AP within the transmission time of TXOP allocated by the STA.

In step 211, the low-latency service data receiving end 103 sends an ACK frame or a Block ACK frame.

After receiving the data frame including low-latency service data sent by the AP, the receiving end sends an ACK frame or a Block ACK frame to respond.

In step 212, the TXOP responder 101 receives the ACK frame or the Block ACK frame.

The AP receives the ACK frame or Block ACK frame fed back by the receiving end. The STA stops data transmission during the TXOP transmission time shared by the STA. When the TXOP transmission time shared by the STA ends, the STA is the initiator of the remaining TXOP and can send data to the AP during the remaining TXOP.

The communication method provided in the embodiments of the present disclosure is also applicable to two STAs that are performing P2P communication. When the TXOP responder (P2P STA) caches a temporary low-latency service for other communication devices (AP or STA), the TXOP initiator (STA) can use the above communication method to share part of the TXOP transmission time with the P2P STA. The P2P STA can transmit low-latency service data to the AP or other STA(s) within the shared TXOP transmission time.

The communication method provided by the embodiments of the present disclosure can effectively deal with bursty low-latency services and ensure the timely and effective transmission of low-latency services. In addition, the communication method provided by the embodiments of the present disclosure can not only be applied to STA sharing part of TXOP with AP, but also be applied to P2P scenarios, sharing part of TXOP with P2P station in need, so that they can transmit low-latency communication services in a timely and effective manner.

The communication method involved in the embodiments of the present disclosure may include at least one of the aforementioned steps and embodiments. For example, step 201 can be implemented as an independent embodiment, step 202 can be implemented as an independent embodiment, step 203 can be implemented as an independent embodiment, step 204 can be implemented as an independent embodiment, step 209 can be implemented as an independent embodiment, and step 210 can be implemented as an independent embodiment; the combination of step 201 and step 202 can be implemented as an independent embodiment, the combination of step 202 and step 203 can be implemented as an independent embodiment, the combination of step 203 and step 204 can be implemented as an independent embodiment, the combination of step 204 and step 209 can be implemented as an independent embodiment, and the combination of step 209 and step 210 can be implemented as an independent embodiment, but it is not limited thereto.

In some embodiments, reference may be made to other optional implementations recorded before or after the description corresponding to FIG. 2.

As an example, referring to FIG. 3, in which the Basic Service Set (BSS) includes a TXOP responder (which can be an AP or a P2P AP, and AP is used as an example below), a TXOP initiator (which can be STA1 or a P2P STA, and STA1 is used as an example below), a low-latency service data receiving end (which can be STA2 or a PAP AP, and STA2 is used as an example below), and other station devices (Other STA).

FIG. 3 shows an optional implementation of the embodiments of the present disclosure, including the following steps.

In step 301: STA1 sends an RTS frame to AP.

In actual communication scenarios, STA and AP devices negotiate to communicate during specific service hours and remain dormant at other time to save device energy consumption. To ensure low-latency service communication, the Restricted Target Wake Time (R-TWT) protocol is defined. Low-latency service communication is performed within the service period (SP) of R-TWT, and other communication services are suspended or postponed during this stage.

For deterministic or periodic low-latency services, the R-TWT mechanism can effectively ensure the timely transmission of low-latency communication services. However, when the AP or STA faces some temporary or bursty low-latency services, the R-TWT mechanism is no longer applicable. When the AP is the initiator of the TXOP and is sending data to its associated STA1, if STA1 caches uplink or P2P low-latency communication services, the AP can trigger the Transmission Opportunity Sharing (TXS) process to allocate part of the time in its reserved TXOP to STA1, and STA1 uses the allocated TXOP to send low-latency services to the AP or the STA corresponding to the P2P link in a timely manner.

In the embodiments of the present disclosure, when the TXOP initiator is STA1, STA1 sends an RTS frame to the AP after obtaining the TXOP transmission opportunity. The RTS frame is used to reserve the right to use the communication medium for use by the AP.

It should be noted that in the entire TXOP, the channel of Other STA is always busy (NAV Busy).

In step 302: AP sends a CTS frame to STA1.

In the embodiments of the present disclosure, after receiving the RTS frame, the AP feeds back a CTS frame to STA1 to confirm the transmission of STA1.

In step 303: STA1 sends data to AP.

In the embodiments of the present disclosure, after receiving the CTS frame, STA1 determines that the CTS is the feedback of the RTS frame previously sent by itself, and the channel of the TXOP initiator is idle, then STA1 sends data to the AP.

In step 304: AP transmits low-latency service data to STA2.

In the embodiments of the present disclosure, the AP replies to STA1 with a Block Ack frame in response to data sent by STA1 within the first TXOP; where the Block Ack frame includes at least one of the first identifier and the first identification field;
the first identifier identifies whether the AP requests STA1 to share part of the transmission time of the first TXOP for low-latency service data transmission;
the first identification field identifies the duration required for the AP to transmit low-latency service data.

In the embodiments of the present disclosure, during the AP receives uplink data sent by STA1, when the AP has temporary or bursty low-latency service data to transmit (at this time, the STA2 channel is busy), the AP carries a first identifier and a first identification field in the Block Ack frame responding to STA1. The first identifier identifies whether the AP requests STA1 to share part of the transmission time of the TXOP for transmission of temporary or bursty low-latency service data; the first identification field identifies the duration required for the AP to transmit temporary or bursty low-latency service data.

In some embodiments, the first identifier is carried in the BA Control field of the Block Ack frame;
the first identifier is set to a first parameter value, indicating that the AP does not request STA1 to share part of the transmission time of the first TXOP for low-latency service data transmission;
the first identifier is set to a second parameter value, indicating that the AP requests STA1 to share part of the transmission time of the first TXOP for low-latency service data transmission.

For example, the BA Control field of the Block Ack frame includes a first identifier. When the first identifier is set to 0, it indicates that the AP does not request STA1 to share part of the transmission time of the first TXOP for low-latency service data transmission; when the first identifier is set to 1, it indicates that the AP requests STA1 to share part of the transmission time of the first TXOP for low-latency service data transmission.

In some embodiments, when the first identifier is set to the second parameter value, the Block Ack frame includes a TXOP Request Info field, and the first identification field is carried in the TXOP Request Info field.

For example, when the first identifier is set to 1, the Block Ack frame also includes a first identification field, which is carried in the TXOP Request Info field.

In some embodiments, the size of the TXOP Requested Info field may be 2 octets, where the size of the first identification field is 9 bits, in units of 16 µs (each bit represents 16 microseconds); the other 7 bits may be used as reserved bits. The transmission duration identified by the first identification field is determined by the AP according to the size of the temporary or bursty low-latency service data in its transmission buffer.

In step 305, AP sends a Block Ack frame to STA1.

In the embodiments of the present disclosure, after setting the first identifier and the first identification field in the Block Ack frame, the AP sends a Block Ack frame to STA1.

In step 306, STA1 sends a MU-RTS TXS Trigger frame to AP.

STA1 may respond according to the Block Ack frame received from the AP. For example, when the first identifier is set to 0, it indicates that the AP does not request STA1 to share part of the transmission time of the first TXOP for low-latency service data transmission, and STA1 continues to send data to the AP; when the first identifier is set to 1, it indicates that the AP requests STA1 to share part of the transmission time of the first TXOP for low-latency service data transmission.

In the embodiments of the present disclosure, the first identifier is set to the second parameter value, and a MU-RTS TXS Trigger frame is sent to the AP; where the MU-RTS TXS Trigger frame includes a second identification field and a third identification field, the second identification field includes a device identifier of a target device to which part of the transmission time of the first TXOP is shared, and the third identification field identifies the transmission time allocated by STA1 to each of the target devices.

For example, after one short interframe space upon receiving the Block Ack frame, STA1 sends a MU-RTS TXS Trigger frame to the AP. The MU-RTS TXS Trigger frame includes one User Info field, and the User Info field includes but is not limited to a second identification field and a third identification field. The second identification field is used to identify that the User Info field carries the device identifier of the target device to which part of the transmission time of the first TXOP is shared. Optionally, the second identification field can be the MAC address of the target AP. The third identification field is used to identify the TXOP duration allocated by STA1 to the AP.

The TXOP duration allocated by STA1 to the AP is greater than or equal to the sum of the duration of the AP sending the RTS frame to the receiving end (STA2) of the low-latency service data, the duration of the receiving end feeding back the CTS frame to the AP, the duration required for the AP to transmit the low-latency service data to STA2, the duration of STA2 feeding back the ACK frame or Block Ack frame to the AP, and the duration of four short interframe spaces.

The four short interframe spaces include one short interframe space between the MU-RTS TXS Trigger frame and the RTS frame, one short interframe space between the RTS frame and the CTS frame, one short interframe space between the CTS frame and the data frame transmitting low-latency service data, and one short interframe space between the data frame transmitting low-latency service data and ACK frame or BA frame fed back by the STA2.

In step 307: the AP sends an RTS frame to STA2 within the TXOP transmission time shared by STA1.

In the embodiments of the present disclosure, transmitting the low-latency service data within the transmission time shared by STA1 for the AP, includes:
sending an RTS frame to STA2; where the receiving address of the RTS frame is the address of STA2; the duration of the RTS frame is set to: the sum of the duration of STA2 sending the CTS frame, the duration required for the AP to transmit the low-latency service data, the duration of STA2 sending the ACK frame, and the duration of three short interframe spaces;
receiving the CTS frame sent by the receiving end, and sending the low-latency service data to the receiving end.

For example, after receiving the MU-RTS TXS Trigger frame and an interval of one SIFS, the AP sends an RTS frame to STA2. The target address of the RTS is the address of STA2; the duration (Duration field) of the RTS frame is set to: the sum of the duration of STA2 sending the CTS frame, the duration required for the AP to transmit the low-latency service data, the duration of STA2 sending the ACK frame, and the duration of three short interframe spaces.

The three short interframe spaces include one short interframe space between the RTS frame and the CTS frame, one short interframe space between the CTS frame and the data frame transmitting low-latency service data, and one short interframe space between the data frame transmitting low-latency service data and ACK frame or BA frame fed back by the STA2.

In the embodiments of the present disclosure, after STA1 shares the TXOP transmission time, STA2 can reset the channel state so that STA2 and AP can perform normal communication during the TXOP transmission time shared by STA1.

In step 308: STA2 sends a CTS frame to the AP within the TXOP transmission time shared by STA1.

In the embodiments of the present disclosure, STA2 feeds back a CTS frame to AP after one SIFS upon receiving the RTS frame sent by AP. The CTS frame carries the AP address, and the Duration field of the CTS frame is set to: the sum of the duration required for AP to transmit low-latency service data, the duration for STA2 to feed back an ACK frame or Block Ack frame to AP, and two short interframe spaces.

The two short interframe spaces include one short interframe space between the CTS frame and the data frame transmitting low-latency service data and one short interframe space between the data frame transmitting low-latency service data and an ACK frame or BA frame fed back by STA2.

In step 309: the AP sends low-latency service data to STA2 within the TXOP transmission time shared by STA1.

After one SIFS upon receiving the CTS sent by STA2, the AP sends the temporary low-latency service data DATA to STA2.

In step 310, STA2 sends an ACK frame or a Block ACK frame to the AP within the TXOP transmission time shared by STA1.

After receiving the data frame including low-latency service data sent by AP, STA2 sends an ACK frame or Block ACK frame to respond.

Optionally, after the AP receives the ACK frame or Block ACK frame sent by STA2, the low-latency service data transmission ends. If there is still remaining duration in the TXOP at this time, STA1 holds the remaining TXOP and can send data to the AP within the remaining TXOP.

It can be seen that in the embodiments of the present disclosure, when STA1 is the TXOP initiator and in the process of sending uplink data to the associated AP, AP has the need to send other low-latency services to STA2, then AP can send the TXOP demand in the response frame, and after receiving the demand, STA1, as the TXOP initiator, can share the reserved TXOP with AP so that it can transmit low-latency services in the shared TXOP. The embodiments of the present disclosure can effectively deal with bursty low-latency services, further improve the low-latency transmission mechanism, and reduce the transmission delay of low-latency communication services.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "codepoint", "bit", "data", "program", and "chip" can be used interchangeably.

In some embodiments, terms such as "moment", "time point", "time", and "time position" can be interchangeable, and terms such as "duration", "time period", "time window", "window", and "time" can be interchangeable.

In some embodiments, terms such as wireless access scheme and waveform may be used interchangeably.

In some embodiments, terms such as "certain", "preseted", "preset", "set", "indicated", "some", "any", and "first" can be interchangeable, and "specific A", "preseted A", "preset A", "set A", "indicated A", "some A", "any A", and "first A" can be interpreted as A predefined in a protocol, etc., or as A obtained through setting, configuration, or indication, etc., and can also be interpreted as specific A, some A, any A, or first A, etc., but is not limited thereto.

In some embodiments, the determination or judgment can be performed by a value (0 or 1) represented by 1 bit, by a true or false value (Boolean value) represented by true or false, or by comparison of numerical values (for example, comparison with a predetermined value), but is not limited thereto.

In some embodiments, "not expecting to receive" can be interpreted as not receiving on time domain resources and/or frequency domain resources, or as not performing subsequent processing on the data after receiving the data; "not expecting to send" can be interpreted as not sending, or as sending but not expecting the recipient to respond to the sent content.

The communication method involved in the embodiments of the present disclosure may include at least one of the aforementioned steps and embodiments. For example, step 305 may be implemented as an independent embodiment, step 306 may be implemented as an independent embodiment, and step 309 may be implemented as an independent embodiment; the combination of step 304 and step 305 may be implemented as an independent embodiment, the combination of step 305 and step 306 may be implemented as an independent embodiment, and the combination of step 309 and step 310 may be implemented as an independent embodiment, but is not limited thereto.

In some embodiments, reference may be made to other optional implementations recorded before or after the description corresponding to FIG. 3.

FIG. 5 is one of the flowchart diagrams of the communication method according to the embodiment of the present disclosure.

As shown in FIG. 5, the above method may be applied to the TXOP responder 101, and the above method includes the following steps.

In step 501, in a first TXOP, in response to data sent by a TXOP initiator, a Block Ack frame is replied to the TXOP initiator; where the Block Ack frame includes at least one of a first identifier and a first identification field;
the first identifier identifies whether the TXOP responder requests the TXOP initiator to share part of transmission time of the first TXOP for transmission of low-latency service data;
the first identification field identifies a duration required for the TXOP responder to transmit the low-latency service data.

In step 502: the first identifier is set to a first parameter value, and data sent by the TXOP initiator is received;
or,
the first identifier is set to a second parameter value, and a MU-RTS TXS Trigger frame sent by the TXOP initiator is received; where the MU-RTS TXS Trigger frame includes a second identification field and a third identification field, the second identification field includes a device identifier of a target device to which part of the transmission time of the first TXOP is shared, and the third identification field identifies the transmission time allocated by the TXOP initiator for each of the target devices.

In step 503, an RTS frame is sent to the receiving end of the low-latency service data; where the receiving address of the RTS frame is the address of the receiving end; the duration of the RTS frame is set to: the sum of the duration of the receiving end sending the CTS frame, the duration required for the TXOP responder to transmit the low-latency service data, the duration of the receiving end sending the ACK frame and three short interframe spaces.

In step 504: the CTS frame sent by the receiving end is received.

In step 505: the low-latency service data is sent to the receiving end.

In step 506, the ACK frame or Block ACK frame sent by the receiving end is received.

Optionally, in an embodiment of the present disclosure, the first identifier is carried in a BA Control field of the Block Ack frame;
the first identifier is set to a first parameter value, identifying that the TXOP responder does not request the TXOP initiator to share part of the transmission time of the first TXOP for transmission of low-latency service data;
the first identifier is set to a second parameter value, identifying that the TXOP responder requests the TXOP initiator to share part of the transmission time of the first TXOP for transmission of low-latency service data.

Optionally, in an embodiment of the present disclosure, when the first identifier is set to the second parameter value, the Block Ack frame includes a TXOP Request Info field, and the first identification field is carried in the TXOP Request Info field.

Optionally, in the embodiment of the present disclosure, the device identifier in the second identification field does not include the device identifier of the TXOP responder, the MU-RTS TXS Trigger frame is not responded to, and data sent by the TXOP initiator is received;
or,
the device identifier in the second identification field includes the device identifier of the TXOP responder, the low-latency service data is transmitted within the transmission time shared by the TXOP initiator for the TXOP responder.

Optionally, in an embodiment of the present disclosure, the TXOP initiator includes a station device, and the TXOP responder includes an access point device;
or,
the TXOP initiator and the TXOP responder are two TDLS devices that have established a TDLS link.

The communication method involved in the embodiments of the present disclosure may include at least one of the aforementioned steps and embodiments. For example, step 501 may be implemented as an independent embodiment, step 502 may be implemented as an independent embodiment, step 503 may be implemented as an independent embodiment, and step 505 may be implemented as an independent embodiment; the combination of step 501 and step 502 may be implemented as an independent embodiment, the combination of step 502 and step 503 may be implemented as an independent embodiment, and the combination of step 505 and step 506 may be implemented as an independent embodiment, but is not limited thereto.

In some embodiments, reference may be made to other optional implementations recorded before or after the description corresponding to FIG. 5.

FIG. 6 is a second flowchart of a communication method according to an embodiment of the present disclosure.

As shown in FIG. 6, the above method may be applied to the TXOP initiator 102, and the above method includes the following steps.

In step 601, in a process of sending data to a TXOP responder in a first TXOP, a Block Ack frame sent by the TXOP responder is received; where the Block Ack frame includes at least one of a first identifier and a first identification field;
the first identifier identifies whether the TXOP responder requests the TXOP initiator to share part of the transmission time of the first TXOP for transmission of low-latency service data;
the first identification field identifies the duration required for the TXOP responder to transmit the low-latency service data.

In step 602: the first identifier is set to the first parameter value, and data is sent to the TXOP responder;
or,
the first identifier is set to the second parameter value, and a MU-RTS TXS Trigger frame is sent to the TXOP responder; where the MU-RTS TXS Trigger frame includes a second identification field and a third identification field, the second identification field includes a device identifier of a target device to which part of the transmission time of the first TXOP is shared, and the third identification field identifies the transmission time allocated by the TXOP initiator to each of the target devices.

Optionally, in an embodiment of the present disclosure, the first identifier is carried in a BA Control field of the Block Ack frame;
the first identifier is set to a first parameter value, identifying that the TXOP responder does not request to use part of the transmission time of the first TXOP shared by the TXOP initiator for transmission of low-latency service data;
the first identifier is set to a second parameter value, identifying that the TXOP responder requests to use part of the transmission time of the first TXOP shared by TXOP initiator for transmission of low-latency service data.

Optionally, in an embodiment of the present disclosure, when the first identifier is set to the second parameter value, the Block Ack frame includes a TXOP Request Info field, and the first identification field is carried in the TXOP Request Info field.

Optionally, in an embodiment of the present disclosure, within the transmission time allocated by the TXOP initiator to the target device, the TXOP initiator sends data only when receiving a data sending request from the target device and responding to the data sending request.

Optionally, in an embodiment of the present disclosure, the TXOP initiator includes an access point device, and the TXOP responder includes a station device;
or,
the TXOP initiator and the TXOP responder are two TDLS devices that have established a TDLS link.

The communication method involved in the embodiments of the present disclosure may include at least one of the aforementioned steps and embodiments. For example, step 601 may be implemented as an independent embodiment, step 602 may be implemented as an independent embodiment, and the combination of step 601 and step 602 may be implemented as an independent embodiment.

In some embodiments, reference may be made to other optional implementations recorded before or after the description corresponding to FIG. 6.

The embodiments of the present disclosure also propose an apparatus for implementing any of the above methods, for example, an apparatus is proposed, and the above apparatus includes a unit or module for implementing each step performed by the terminal in any of the above methods. For another example, another apparatus is also proposed, including a unit or module for implementing each step performed by the network device (such as an access network device, a core network function node, a core network device, etc.) in any of the above methods.

It should be understood that the division of the units or modules in the above apparatus is only a division of logical functions, which can be fully or partially integrated into one physical entity or physically separated in actual implementation. In addition, the units or modules in the apparatus can be implemented in the form of a processor calling software. For example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be implemented by designing the hardware circuits. The hardware circuits may be understood as one or more processors; for example, in one implementation, the hardware circuits are application-specific integrated circuits (ASICs), and the functions of some or all of the above units or modules may be implemented by designing the logical relationship of the components in the circuits; for another example, in another implementation, the hardware circuits may be implemented by programmable logic devices (PLDs), and Field Programmable Gate Arrays (FPGAs) may be used as an example, which may include a large number of logic gate circuits, and the connection relationship between the logic gate circuits may be configured by configuring the configuration files, thereby implementing the functions of some or all of the above units or modules. All units or modules of the above apparatuses may be implemented in the form of software called by the processor, or in the form of hardware circuits, or part in the form of software called by the processor, and the remaining part being implemented in the form of hardware circuits.

In the embodiments of the present disclosure, the processor is a circuit with signal processing capability. In one implementation, the processor may be a circuit with instruction reading and execution capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, such as a hardware circuit with the processor being implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (PLD), a Deep Learning Processing Unit (DPU), etc.

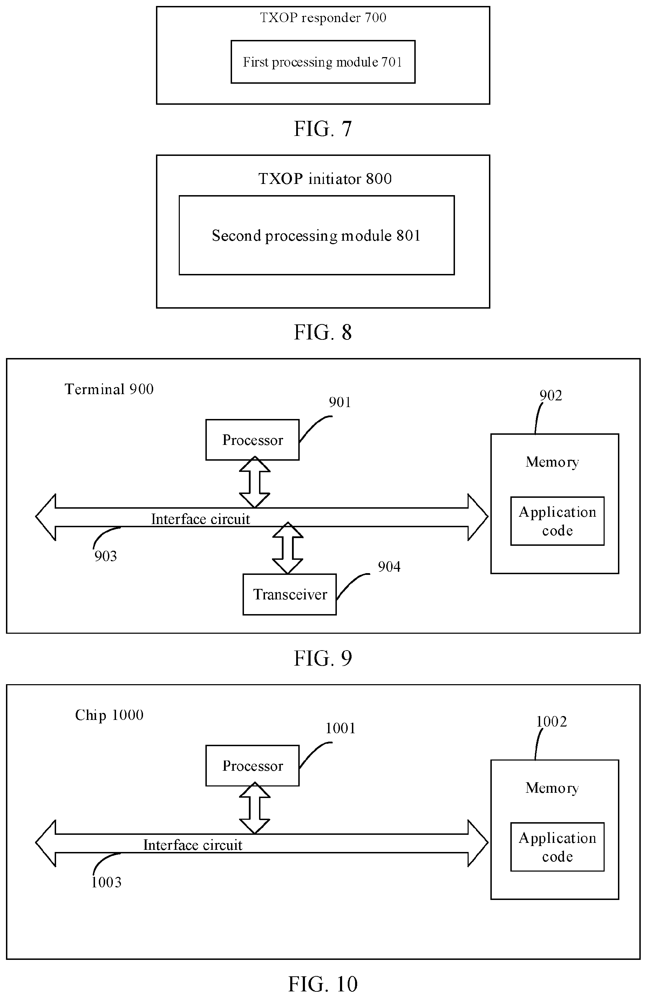

FIG. 7 is a schematic diagram of the structure of a TXOP responder proposed in an embodiment of the present disclosure. As shown in FIG. 7, a TXOP responder 700 may include: a first processing module 701.

In some embodiments, the first processing module 701 is configured to reply with a Block Ack frame to the TXOP initiator in response to data sent by the TXOP initiator in the first TXOP; where the Block Ack frame includes at least one of a first identifier and a first identification field;
the first identifier identifies whether the TXOP responder requests the TXOP initiator to share part of transmission time of the first TXOP for transmission of low-latency service data;
the first identification field identifies a duration required for the TXOP responder to transmit the low-latency service data.

Optionally, the first processing module 701 is configured to execute at least one of the communication steps (such as step 201, step 305, step 501, but not limited thereto) executed by the TXOP responder 101 in any of the above methods, which will not be described in detail here.

FIG. 8 is a schematic diagram of the structure of a TXOP initiator proposed in an embodiment of the present disclosure. As shown in FIG. 8, a TXOP initiator 800 may include: a second processing module 801.

In some embodiments, the second processing module 801 is configured to receive a Block Ack frame sent by the TXOP responder during a process of sending data to the TXOP responder in a first TXOP; where the Block Ack frame includes at least one of a first identifier and a first identification field;
the first identifier identifies whether the TXOP responder requests the TXOP initiator to share part of transmission time of the first TXOP for transmission of low-latency service data;
the first identification field identifies a duration required for the TXOP responder to transmit the low-latency service data.

Optionally, the second processing module 801 is configured to execute at least one of the communication steps (such as step 202 and step 601, but not limited thereto) executed by the TXOP initiator 102 in any of the above methods, which will not be described in detail here.

FIG. 9 is a schematic diagram of the structure of a terminal 900 (e.g., user equipment, etc.) proposed in an embodiment of the present disclosure. The terminal 900 may be a chip, a chip system, or a processor, etc. that supports a network device to implement any of the above methods, or may be a chip, a chip system, or a processor, etc. that supports a terminal to implement any of the above methods. The terminal 900 may be used to implement the method described in the above method embodiments, and the details may refer to the description in the above method embodiments.

As shown in FIG. 9, the terminal 900 includes one or more processors 901. The processor 901 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. The terminal 900 is used to execute any of the above methods.

In some embodiments, the terminal 900 further includes one or more memories 902 for storing instructions. Optionally, all or part of the memory 902 may also be outside the terminal 900.

In some embodiments, the terminal 900 further includes one or more transceivers 904. When the terminal 900 includes one or more transceivers 904, the transceiver 904 performs at least one of the communication steps such as sending and/or receiving in the above methods (for example, step 201, step 202, step 203, step 204, step 205, step 206, step 207, step 208, step 209, step 210, step 211, step 212, step 301, step 302, step 303, step 305, step 306, step 307, step 308, step 309, step 310, step 501, step 502, step 503, step 504, step 505, step 506, step 601, step 602, but not limited thereto), and the processor 901 performs other steps (for example, step 304).

In some embodiments, the transceiver may include a receiver and/or a transmitter, and the receiver and the transmitter may be separate or integrated. Optionally, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

In some embodiments, the terminal 900 may include one or more interface circuits 903. Optionally, the interface circuit 903 is connected to the memory 902, and the interface circuit 903 may be used to receive signals from the memory 902 or other apparatuses, and may be used to send signals to the memory 902 or other apparatuses. For example, the interface circuit 903 may read instructions stored in the memory 902 and send the instructions to the processor 901.

The terminal 900 described in the above embodiments may be a communication device such as a user equipment, but the scope of the terminal 900 described in the present disclosure is not limited thereto, and the structure of the terminal 900 may not be limited by FIG. 9. The communication device may be an independent device or may be part of a larger device. For example, the communication device may be: (1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, a smart terminal device, a cellular phone, a wireless device, a handheld device, a mobile unit, a vehicle-mounted device, a network device, a cloud device, an artificial intelligence device, etc.; (6) others, etc.

FIG. 10 is a schematic diagram of the structure of a chip 1000 provided in an embodiment of the present disclosure. In the case where the terminal 900 may be a chip or a chip system, reference may be made to the schematic diagram of the structure of the chip 1000 shown in FIG. 10, but the present disclosure is not limited thereto.

The chip 1000 includes one or more processors 1001, and the chip 1000 is used to execute any of the above methods.

In some embodiments, the chip 1000 further includes one or more 1003. Optionally, the interface circuit 1003 is connected to the memory 1002. The interface circuit 1003 can be used to receive signals from the memory 1002 or other apparatuses, and the interface circuit 1003 can be used to send signals to the memory 1002 or other apparatuses. For example, the interface circuit 1003 can read the instructions stored in the memory 1002 and send the instructions to the processor 1001.

In some embodiments, the interface circuit 1003 executes at least one of the communication steps such as sending and/or receiving in the above methods (for example, step 201, step 202, step 203, step 204, step 205, step 206, step 207, step 208, step 209, step 210, step 211, step 212, step 301, step 302, step 303, step 305, step 306, step 307, step 308, step 309, step 310, step 501, step 502, step 503, step 504, step 505, step 506, step 601, step 602, but not limited thereto), and the processor 1001 executes other steps (for example, step 304).

In some embodiments, terms such as interface circuit, interface, transceiver pin, and transceiver may be used interchangeably.

In some embodiments, the chip 1000 further includes one or more memories 1002 for storing instructions. Alternatively, all or part of the memory 1002 may be outside the chip 1000.

The present disclosure also proposes a storage medium, on which instructions are stored, and when the instructions are executed on the terminal 900, the terminal 900 executes any of the above methods. Optionally, the storage medium is an electronic storage medium. Optionally, the storage medium is a computer-readable storage medium, but is not limited thereto, and it may also be a storage medium readable by other apparatuses. Optionally, the storage medium may be a non-transitory storage medium, but is not limited thereto, and it may also be a temporary storage medium.

The present disclosure also proposes a program product, and when the program product is executed by the terminal 900, the terminal 900 executes any of the above methods. Optionally, the program product is a computer program product.

The present disclosure also proposes a computer program, which, when executed on a computer, causes the computer to execute any one of the above methods.

## Claims

1. A communication method, applied to a TXOP responder, wherein the method comprises:
in a first transmission opportunity (TXOP), in response to data sent by a TXOP initiator, replying with a Block Ack frame to the TXOP initiator; wherein the Block Ack frame comprises at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

2. The communication method according to claim 1, wherein the first identifier is carried in a Block Ack (BA) Control field of the Block Ack frame;
the first identifier is set to a first parameter value, identifying that the TXOP responder does not request the TXOP initiator to share part of the transmission time of the first TXOP for transmission of the low-latency service data;
the first identifier is set to a second parameter value, identifying that the TXOP responder requests the TXOP initiator to share part of the transmission time of the first TXOP for transmission of the low-latency service data.

3. The communication method according to claim 2, wherein when the first identifier is set to the second parameter value, the Block Ack frame comprises a transmission opportunity (TXOP) Request Info field, and the first identification field is carried in the TXOP Request Info field.

4. The communication method according to claim 2, wherein after replying with the Block Ack frame to the TXOP initiator, the method further comprises:
the first identifier being set to the first parameter value, receiving data sent by the TXOP initiator;
or
the first identifier being set to the second parameter value, receiving a multi-user request to send transmission opportunity sharing (MU-RTS TXS) Trigger frame sent by the TXOP initiator; wherein the MU-RTS TXS Trigger frame comprises a second identification field and a third identification field, the second identification field comprises a device identifier of a target device to which part of the transmission time of the first TXOP is shared, and the third identification field identifies the transmission time allocated by the TXOP initiator for each of the target devices.

5. The communication method according to claim 4, wherein after receiving the MU-RTS TXS Trigger frame sent by the TXOP initiator, the method comprises:
the device identifier in the second identification field not comprising a device identifier of the TXOP responder, not responding to the MU-RTS TXS Trigger frame, and receiving data sent by the TXOP initiator;
or
the device identifier in the second identification field comprising the device identifier of the TXOP responder, transmitting the low-latency service data within the transmission time shared by the TXOP initiator for the TXOP responder.

6. The communication method according to claim 5, wherein transmitting the low-latency service data within the transmission time shared by the TXOP initiator for the TXOP responder comprises:
sending a request to send (RTS) frame to a receiving end of the low-latency service data; wherein a receiving address of the RTS frame is an address of the receiving end; the duration of the RTS frame is set to: a sum of a duration of the receiving end sending a clear to send (CTS) frame, a duration required for the TXOP responder to transmit the low-latency service data, a duration of the receiving end sending an ACK frame, and three short interframe spaces; and
receiving the CTS frame sent by the receiving end, and sending the low-latency service data to the receiving end.

7. The communication method according to any one of claims 1 to 6, wherein the TXOP initiator comprises a station device, and the TXOP responder comprises an access point device;
or
the TXOP initiator and the TXOP responder are two TDLS devices that have established a tunneled direct link setup (TDLS) link.

8. A communication method, applied to a TXOP initiator, wherein the method comprises:
in a first transmission opportunity (TXOP), during a process of sending data to a TXOP responder, receiving a Block Ack frame sent by the TXOP responder; wherein the Block Ack frame comprises at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

9. The communication method according to claim 8, wherein the first identifier is carried in a Block Ack (BA) Control field of the Block Ack frame;
the first identifier is set to a first parameter value, identifying that the TXOP responder does not request to use part of the transmission time of the first TXOP shared by the TXOP initiator for transmission of the low-latency service data;
the first identifier is set to a second parameter value, identifying that the TXOP responder requests to use part of the transmission time of the first TXOP shared by the TXOP initiator for transmission of the low-latency service data.

10. The communication method according to claim 9, wherein when the first identifier is set to the second parameter value, the Block Ack frame comprises a transmission opportunity (TXOP) Request Info field, and the first identification field is carried in the TXOP Request Info field.

11. The communication method according to claim 9, wherein after receiving the Block Ack frame sent by the TXOP responder, the method further comprises:
the first identifier being set to the first parameter value, sending data to the TXOP responder;
or
the first identifier being set to the second parameter value, sending a multi-user request to send transmission opportunity sharing (MU-RTS TXS) Trigger frame to the TXOP responder; wherein the MU-RTS TXS Trigger frame comprises a second identification field and a third identification field, the second identification field comprises a device identifier of a target device to which part of the transmission time of the first TXOP is shared, and the third identification field identifies the transmission time allocated by the TXOP initiator for each of the target devices.

12. The communication method according to claim 11, wherein:
within the transmission time allocated by the TXOP initiator to the target device, the TXOP initiator sends data only in a case of receiving a data sending request from the target device and responding to the data sending request.

13. The communication method according to any one of claims 8 to 12, wherein the TXOP initiator comprises an access point device, and the TXOP responder comprises a station device;
or
the TXOP initiator and the TXOP responder are two TDLS devices that have established a tunneled direct link setup (TDLS) link.

14. A communication device, wherein the communication device is a TXOP responder, wherein the TXOP responder comprises:
a first processing module, configured to reply with a Block Ack frame to the TXOP initiator in response to data sent by a TXOP initiator in a first TXOP; wherein the Block Ack frame comprises at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

15. A communication device, wherein the communication device is a TXOP initiator, wherein the TXOP initiator comprises:
a second processing module, configured to receive a Block Ack frame sent by a TXOP responder during a process of sending data to the TXOP responder in a first TXOP; wherein the Block Ack frame comprises at least one of a first identifier and a first identification field;
the first identifier identifies whether the TXOP responder requests the TXOP initiator to share part of transmission time of the first TXOP for transmission of low-latency service data; and
the first identification field identifies a duration required for the TXOP responder to transmit the low-latency service data.

16. A communication device, wherein the communication device is a TXOP responder, and comprises:
one or more processors;
wherein the TXOP responder is configured to execute the communication method according to any one of claims 1 to 7.

17. A communication device, wherein the communication device is a TXOP initiator, and comprises:
one or more processors;
wherein the TXOP initiator is configured to execute the communication method according to any one of claims 8 to 13.

18. A communication system, comprising a TXOP responder and a TXOP initiator; wherein the TXOP responder is configured to implement the communication method according to any one of claims 1 to 7, and the TXOP initiator is configured to implement the communication method according to any one of claims 8 to 13.

19. A storage medium storing instructions, wherein when the instructions are executed on a communication device, the communication device executes the communication method according to any one of claims 1 to 7, or executes the communication method according to any one of claims 8 to 13.
